# EUROPEAN PATENT SPECIFICATION

(11) **EP 3 512 703 B1**
(45) Date of publication and mention of the grant of the patent: **26.05.2021**
(21) Application number: 17781572.7
(22) Date of filing: 18.09.2017
(51) Int. Cl.: B29C 64/393, B29C 64/20, B33Y 30/00, B22F 10/20, B22F 12/00, B29C 64/153, B22F 10/00

(54) **APPARATUS FOR PRODUCING AN OBJECT BY MEANS OF ADDITIVE MANUFACTURING AND METHOD OF USING THE APPARATUS**
VORRICHTUNG ZUR HERSTELLUNG EINES OBJEKTS MITTELS GENERATIVER FERTIGUNG UND VERFAHREN ZUR VERWENDUNG DER VORRICHTUNG
APPAREIL DE PRODUCTION D'UN OBJET PAR FABRICATION ADDITIVE ET PROCÉDÉ D'UTILISATION DE L'APPAREIL

(30) Priority: 16.09.2016 NL 2017474
(43) Date of publication of application: 24.07.2019
(73) Proprietor: Additive Industries B.V., 5600 GA Eindhoven (NL)
(72) Inventor: HAMERS, Martijn Robert, 5600 GA Eindhoven (NL); VAN HAENDEL, Rob Peter Albert, 5600 GA Eindhoven (NL); VAES, Mark Herman Else, 5600 GA Eindhoven (NL)
(74) Representative: Algemeen Octrooi- en Merkenbureau B.V.
(86) International application number: PCT/NL2017/050609
(87) International publication number: WO 2018/052296

(56) References cited:
- WO-A2-2015/077195
- CN-U- 205 033 598
- US-A1- 2007 037 509
- US-A1- 2015 231 831

## Description

According to a first aspect the invention relates to an apparatus for producing an object by means of additive manufacturing, according to claim 1.

According to a second aspect the invention relates to a method of producing an object according to claim 5, by means of additive manufacturing on a build surface of a build plate, using an apparatus according to the first aspect.

3D printing or additive manufacturing refers to any of various processes for manufacturing a three-dimensional object. Traditional techniques like injection molding can be less expensive for manufacturing, for example, polymer products in high quantities, but 3D printing or additive manufacturing can be faster, more flexible and less expensive when producing relatively small quantities of three-dimensional objects.

It is anticipated that additive manufacturing becomes more and more important in the future, as the increasing competitive pressure forces companies to not only manufacture more economically with a constant high product quality but also to save time and costs in the area of product development. The life span of products is continuously shortened. In addition to product quality and product costs, the moment of market introduction is becoming increasingly important for the success of a product.

The three-dimensional object may be produced by selectively solidifying, in a layer-like fashion, a powder, paper or sheet material to produce a three-dimensional, 3D, object. In particular, a computer controlled additive manufacturing apparatus may be used which sequentially sinters a plurality of layers to build the desired object in a layer-by-layer fashion. Primarily additive processes are used, in which successive layers of material are laid down under computer control. These objects can be of almost any shape or geometry, and are produced from a 3D model or other electronic data source.

In order to print a three-dimensional object, a printable model is to be created with a computer design package or via a 3D scanner, for example. Usually, the input is a 3D CAD file such as an STL file, a STEP file or a IGS file. Before printing the object from a CAD file, the file is to be processed by a piece of software, which converts the model into a series of thin subsequent layers. Further, apparatus settings and vectors are generated for controlling the creation of each of the subsequent layers.

A laser comprised in the computer controlled additive manufacturing apparatus follows these settings and vectors to solidify successive layers of material to built the 3D object from a series of cross sections. These layers, which correspond to the virtual cross sections from the CAD model, are during this process joined or fused at the same time to create the final 3D object.

One of the challenges in the manufacturing of three dimensional objects, in particular in additive manufacturing of metal objects, is achieving a desired accuracy of the manufactured object. According to prior art practice, an object is manufactured on a build plate, wherein the object is joined to the build plate through solidification of material used to build the object. A drawback of this practice is a relative large variation in force required to separate the object from the build plate.

US2007/037509 A1 discloses an apparatus for producing an object by additive manufacturing comprising a homing device to move the building surface to a starting position, said homing device comprising a contact-based detection device.

It is therefore an object of the invention to provide an apparatus for producing an object by means of additive manufacturing, having a reduced variation in force required to separate a manufactured object from the build plate.

Thereto, the invention provides an apparatus according to claim 1. The apparatus comprises, a process chamber for receiving a bath of material which can be solidified, in particular a bath of powdered material that can be solidified in order to make metal products. A support is provided for positioning the build plate in relation to the surface level in the process chamber of the bath of material. A solidifying device, such as a laser device, for solidifying a layer of the material on the surface, in particular by means of electromagnetic radiation, is provided. To reduce the variation of separation force a homing device is provided. According to the invention the variation of separation force is reduced by moving the build surface, by the support, to a home position. Moving the build surface to the home position allows for an increased accuracy of a height of the bath of powdered material before starting manufacturing of an object. An increased accuracy of the height of the bath of powdered material results in a more accurate solidification at the build surface, thereby reducing the variation of separation force required for removing the object from the build surface. Changing of said height of said bath is such that said surface level of said bath of powdered material in said process chamber is substantially maintained until said surface of said build surface and/or a pre-determined image of said surface level of said bath of powdered material on said build surface is detected by said detection device. Maintaining said surface level is advantageous for maintaining a substantially constant home position. The homing device comprises a powder removing device for removing at least a layer of powdered material from said bath of powdered material on said build surface of said build plate to substantially maintain said surface level. This is advantageous for realizing a relative accurate positioning of the build surface at the home position.

It is advantageous if said homing device comprises a layering device for providing a layer of powdered material on said bath of powdered material on said build surface of said build plate to substantially maintain said surface level. This is advantageous for realizing a relative accurate positioning of the build surface at the home position.

It is beneficial if said home position comprises a substantially flat reference plane, wherein said homing device comprises a tilting device for tilting said build surface to a position wherein said build surface is substantially parallel to said substantially flat reference plane in dependence of said detected build surface of said build plate and/or in dependence of said detected surface of said bath of powdered material on said build surface. Such an embodiment is beneficial for realizing a reduced variation of separation force of the object along the build surface. A reduced variation along the surface of the object reduces the risk of local damaging the object upon removing the object from the build surface.

The detection device comprises a camera for detection of said build surface.

According to a second aspect the invention relates to a method of producing an object by means of additive manufacturing on a build surface of a build plate, using an apparatus according to the first aspect of the invention. The method comprises the steps of:
- receiving said build surface of said build plate in said process chamber;
- receiving in said process chamber said bath of powdered material which can be solidified on said build surface to said surface level;
- moving said build surface to said home position while changing a height of said bath of powdered material above said build surface in said process chamber until said surface of said build surface and/or said pre-determined image of said surface of said bath of powdered material on said build surface is detected by said detection device, wherein during said step of moving said build surface to said home position said changing of said height of said bath is such that said surface level of said bath of powdered material in said process chamber is substantially maintained until said surface of said build surface and/or a pre-determined image of said surface level of said bath of powdered material on said build surface is detected by said detection device, wherein during said step of moving said build surface, said powder removing device removes a layer of powdered material from said bath of powdered material on said build surface of said build plate to substantially maintain said surface level of said bath of powdered material in said process chamber. The advantages of the method according to the second aspect of the invention are analogue to the benefits of the apparatus according to the first aspect of the invention.

In this regard it is beneficial if during said step of moving said build surface, said layering device provides a layer of powdered material to said bath of powdered material on said build surface of said build plate to substantially maintain said surface level of said bath of powdered material in said process chamber. This is advantageous for realizing a relative accurate positioning of the build surface at the home position.

It is beneficial if during said step of moving said build surface, said build surface is tilted to a position wherein said build surface is substantially parallel to said substantially flat reference plane in dependence of said detected build surface of said build plate and/or in dependence of said detected surface of said bath of powdered material on said build surface. Such an embodiment is beneficial for realizing a reduced variation of separation force of the object along the build surface. A reduced variation along the surface of the object reduces the risk of local damaging the object upon removing the object from the build surface.

An embodiment of the invention will be described in the following wherein:

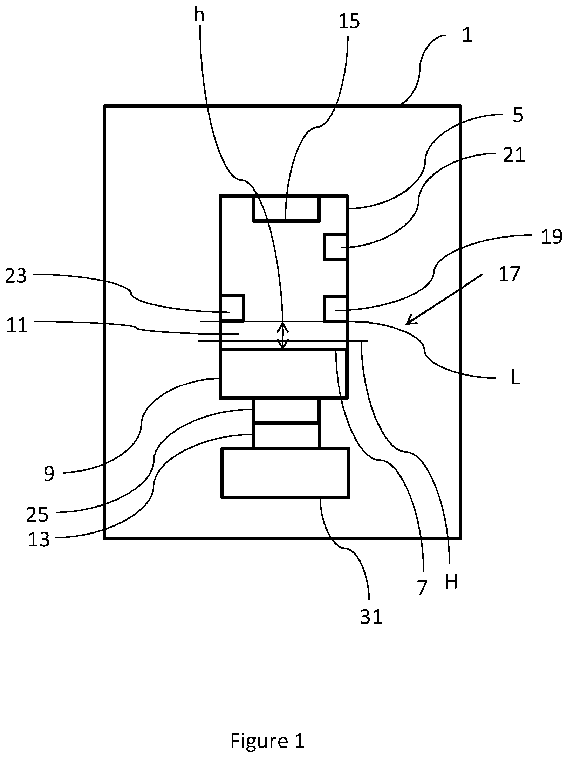

Fig. 1 is a schematic overview of an apparatus according to the present invention for additive manufacturing an object.

Figure 1 shows an overview of an apparatus 1 for producing an object by means of additive manufacturing. The apparatus 1 comprises a process chamber 5 for receiving a bath of powdered material 11 which can be solidified. The bath of powdered material is receivable on a build surface 7 of a build plate 9. The build plate 9 may be positioned in relation to a surface level (L) of said bath of powdered material 11 in said process chamber 5, wherein the bath of powdered material 11 has a height h above the build surface 7 of the build plate 9. The support 13 is movably provided in a shaft 31, such that after solidifying a layer, the support 13 may be lowered, and a further layer of material may be solidified on top of the part of the object already formed. A tilting device 25 is provided for tilting the build surface 7 towards a substantially flat reference plane H. A solidifying device 15 is provided for solidifying a selective part of the material. In the embodiment shown, the solidifying device 15 is a laser device, which is arranged for producing electromagnetic radiation in the form of laser light, in order to melt a powdered material provided on the build surface 7, which then, after cooling forms a solidified part of the object to be produced. However, the invention is not limited to the type of solidifying device.

The apparatus 1 comprises a homing device 17 for moving the build surface 7 to a home position and removing or adding powdered material 11 above the build surface 7 for substantially maintaining a constant surface level L in the process chamber 5. The homing device 17 comprises a camera 21 for detecting the build surface 7 and the surface level L of the bath of powdered material 11. For removing powdered material 11 a powder removing device 23 is provided. The powder removing device comprises 23 a wiper which is arrange to move along the surface level L and thereby remove a layer of material from the bath of material 11. A layer of powdered material can be added to the bath of powdered material 11 using a layering device 19. The homing device 17 is designed to move the build surface 7 until the surface of the build surface 7 is detected by the camera 21 under the bath of powdered material 11.

In case the camera 21 detects the build surface 7 only near one end of the build surface 7 the tilting device 25 is activated for tilting the build surface 7 to a position wherein the build surface 7 is substantially parallel to the substantially flat reference plane H. Should the camera 21 detect a relative large part of the build surface 7 compared to the powdered material 11 a layer of powdered material is added to the bath of material 11.

## Claims

1. Apparatus (1) for producing an object by means of additive manufacturing, comprising:
- a process chamber (5) for receiving on a build surface (7) of a build plate (9) a bath of powdered material (11) which can be solidified;
- a support (13) for positioning said build plate (9) in relation to a surface level (L) of said bath of powdered material (11) in said process chamber (5);
- a solidifying device (15) for solidifying a selective part of said material (11); and
- a homing device (17) for moving said build surface (7), by said support (13), to a home position such that said object can be built on said build surface (7) of said build plate (9), wherein said homing device (17) comprises a detection device (21) comprising a camera configured for detecting said build surface (7) of said build plate (9) and for detecting said surface level (L) of said bath of powdered material (11) on said build surface (7), wherein said homing device (17) is configured for moving said build surface (7) to said home position while changing a height (h) of said bath of powdered material (11) above said build surface (7) until said surface of said build surface (7) and/or a pre-determined image of said surface level (L) of said bath of powdered material (11) on said build surface (7) is detected by said detection device (21), wherein said changing of said height (h) of said bath is such that said surface level (L) of said bath of powdered material (11) in said process chamber (5) is substantially maintained until said surface of said build surface (7) and/or a pre-determined image of said surface level (L) of said bath of powdered material (11) on said build surface (7) is detected by said detection device (21), wherein said homing device (17) comprises a powder removing device (23) configured for removing at least a layer of powdered material (11) from said bath of powdered material (11) on said build surface (7) of said build plate (9) to substantially maintain said surface level (L).

2. Apparatus (1) according to claim 1, wherein said homing device (17) comprises a layering device (19) for providing a layer of powdered material (11) on said bath of powdered material (11) on said build surface (7) of said build plate (9) to substantially maintain said surface level (L).

3. Apparatus (1) according to any one of the preceding claims, wherein said home position comprises a substantially flat reference plane (H), wherein said homing device (17) comprises a tilting device (25) for tilting said build surface (7) to a position wherein said build surface (7) is substantially parallel to said substantially flat reference plane (H) in dependence of said detected build surface (7) of said build plate (9) and/or in dependence of said detected surface of said bath of powdered material (11) on said build surface (7).

4. Apparatus (1) according to any one of the preceding claims, wherein said powder removing device (23) comprises a wiper that is arranged to move along the surface level (L) and thereby remove a layer of material from the bath of material (11).

5. Method of producing an object by means of additive manufacturing on a build surface (7) of a build plate (9), using an apparatus (1) according to any of the previous claims, the method comprises the steps of:
- receiving said build surface (7) of said build plate (9) in said process chamber (5);
- receiving in said process chamber (5) said bath of powdered material (11) which can be solidified on said build surface (7) to said surface level (L);
- moving said build surface (7) to said home position while changing a height (h) of said bath of powdered material (11) above said build surface (7) in said process chamber (5) until said surface of said build surface (7) and/or said pre-determined image of said surface of said bath of powdered material (11) on said build surface (7) is detected by said detection device (21), wherein during said step of moving said build surface (7) to said home position said changing of said height (h) of said bath is such that said surface level (L) of said bath of powdered material (11) in said process chamber (5) is substantially maintained until said surface of said build surface (7) and/or a pre-determined image of said surface level (L) of said bath of powdered material (11) on said build surface (7) is detected by said detection device (21), wherein during said step of moving said build surface (7), said powder removing device (23) removes a layer of powdered material (11) from said bath of powdered material (11) on said build surface (7) of said build plate (9) to substantially maintain said surface level (L) of said bath of powdered material (11) in said process chamber (5).

6. Method according to claim 5 using an apparatus (1) according to claim 3, wherein during said step of moving said build surface (7), said layering device (19) provides a layer of powdered material (11) to said bath of powdered material (11) on said build surface (7) of said build plate (9) to substantially maintain said surface level (L) of said bath of powdered material (11) in said process chamber (5).

7. Method according to claim 5 or 6 using an apparatus (1) according to claim 3, wherein during said step of moving said build surface (7), said build surface (7) is tilted to a position wherein said build surface (7) is substantially parallel to said substantially flat reference plane (H) in dependence of said detected build surface (7) of said build plate (9) and/or in dependence of said detected surface of said bath of powdered material (11) on said build surface (7).

## Patentansprüche

1. Vorrichtung (1) zur Herstellung eines Objekts mittels generativer Fertigung, umfassend:
- eine Prozesskammer (5) zum Aufnehmen eines Bades aus pulverisiertem Material (11), das verfestigt werden kann, auf einer Bauoberfläche (7) einer Bauplattform (9);
- einen Träger (13) zum Positionieren der Bauplattform (9) in Bezug auf ein Oberflächenniveau (L) des Bades aus pulverisiertem Material (11) in der Prozesskammer (5);
- eine Verfestigungsvorrichtung (15) zum Verfestigen eines selektiven Teils des Materials (11); und
- eine Heimfindevorrichtung (Homing-Vorrichtung) (17) zum Bewegen der Bauoberfläche (7) durch den Träger (13) in die Heimposition (Home-Position), so dass das Objekt auf der Bauoberfläche (7) der Bauplattform (9) gebaut werden kann, wobei die Homing-Vorrichtung (17) eine Detektierungsvorrichtung (21) umfasst, die eine Kamera umfasst, die zum Detektieren der Bauoberfläche (7) der Bauplattform (9) und zum Detektieren des Oberflächenniveaus (L) des Bades aus pulverisiertem Material (11) auf der Bauoberfläche (7) konfiguriert ist,
wobei die Homing-Vorrichtung (17) konfiguriert ist, um die Bauoberfläche (7) zu der Home-Position zu bewegen, während eine Höhe (h) des Bades aus pulverisiertem Material (11) oberhalb der Bauoberfläche (7) geändert wird, bis die Oberfläche der Bauoberfläche (7) und/oder ein vorbestimmtes Bild des Oberflächenniveaus (L) des Bades aus pulverisiertem Material (11) auf der Bauoberfläche (7) durch die Detektierungsvorrichtung (21) detektiert wird bzw. werden, wobei das Ändern der Höhe (h) des Bades so ist, dass das Oberflächenniveau (L) des Bades aus pulverisiertem Material (11) in der Prozesskammer (5) im Wesentlichen aufrechterhalten wird, bis die Oberfläche der Bauoberfläche (7) und/oder ein vorbestimmtes Bild des Oberflächenniveaus (L) des Bades aus pulverisiertem Material (11) auf der Bauoberfläche (7) durch die Detektierungsvorrichtung (21) detektiert wird bzw. werden, wobei die Homing-Vorrichtung (17) eine Pulverentfernungsvorrichtung (23) umfasst, die konfiguriert ist, um mindestens eine Schicht aus pulverisiertem Material (11) von dem Bad aus pulverisiertem Material (11) auf der Bauoberfläche (7) der Bauplattform (9) zu entfernen, um das Oberflächenniveau (L) im Wesentlichen aufrechtzuerhalten.

2. Vorrichtung (1) nach Anspruch 1, wobei die Homing-Vorrichtung (17) eine Schichtungsvorrichtung (19) umfasst, um eine Schicht aus pulverisiertem Material (11) auf dem Bad aus pulverisiertem Material (11) auf der Bauoberfläche (7) der Bauplattform (9) bereitzustellen, um das Oberflächenniveau (L) im Wesentlichen aufrechtzuerhalten.

3. Vorrichtung (1) nach einem der vorhergehenden Ansprüche, wobei die Home-Position eine im Wesentlichen flache Referenzebene (H) umfasst, wobei die Homing-Vorrichtung (17) eine Kippvorrichtung (25) zum Kippen der Bauoberfläche (7) in eine Position, in welcher die Bauoberfläche (7) im Wesentlichen parallel zu der im Wesentlichen flachen Referenzebene (H) ist, in Abhängigkeit von der detektierten Bauoberfläche (7) der Bauplattform (9) und/oder in Abhängigkeit von der detektierten Oberfläche des Bades aus pulverisiertem Material (11) auf der Bauoberfläche (7) umfasst.

4. Vorrichtung (1) nach einem der vorhergehenden Ansprüche, wobei die Pulverentfernungsvorrichtung (23) einen Wischer umfasst, der angeordnet ist, um sich entlang des Oberflächenniveaus (L) zu bewegen und dadurch eine Schicht aus Material von dem Bad aus Material (11) zu entfernen.

5. Verfahren zur Herstellung eines Objekts mittels generativer Fertigung auf einer Bauoberfläche (7) einer Bauplattform (9) unter Verwendung einer Vorrichtung (1) gemäß einem der vorhergehenden Ansprüche, wobei das Verfahren die Schritte umfasst:
- Aufnehmen der Bauoberfläche (7) der Bauplattform (9) in der Prozesskammer (5);
- Aufnehmen des Bades aus pulverisiertem Material (11), das verfestigt werden kann, auf der Bauoberfläche (7) bis zu dem Oberflächenniveau (L) in der Prozesskammer (5);
- Bewegen der Bauoberfläche (7) in die Home-Position, während eine Höhe (h) des Bades aus pulverisiertem Material (11) oberhalb der Bauoberfläche (7) in der Prozesskammer (5) geändert wird, bis die Oberfläche der Bauoberfläche (7) und/oder das vorbestimmte Bild der Oberfläche des Bades aus pulverisiertem Material (11) auf der Bauoberfläche (7) durch die Detektierungsvorrichtung (21) detektiert wird bzw. werden, wobei während des Schritts des Bewegens der Bauoberfläche (7) in die Home-Position das Ändern der Höhe (h) des Bades so ist, dass das Oberflächenniveau (L) des Bades aus pulverisiertem Material (11) in der Prozesskammer (5) im Wesentlichen aufrechterhalten wird, bis die Oberfläche der Bauoberfläche (7) und/oder ein vorbestimmtes Bild des Oberflächenniveaus (L) des Bades aus pulverisiertem Material (11) auf der Bauoberfläche (7) durch die Detektierungsvorrichtung (21) detektiert wird bzw. werden, wobei während des Schritts des Bewegens der Bauoberfläche (7) die Pulverentfernungsvorrichtung (23) eine Schicht aus pulverisiertem Material (11) aus dem Bad des pulverisierten Materials (11) auf der Bauoberfläche (7) der Bauplattform (9) entfernt, um das Oberflächenniveau (L) des Bades aus pulverisiertem Material (11) in der Prozesskammer (5) im Wesentlichen aufrechtzuerhalten.

6. Verfahren nach Anspruch 5 unter Verwendung einer Vorrichtung (1) nach Anspruch 3, wobei während des Schritts des Bewegens der Bauoberfläche (7) die Schichtungsvorrichtung (19) dem Bad aus pulverisiertem Material (11) auf der Bauoberfläche (7) der Bauplattform (9) eine Schicht aus pulverisiertem Material (11) bereitstellt, um das Oberflächenniveau (L) des Bades aus pulverisiertem Material (11) in der Prozesskammer (5) im Wesentlichen aufrechtzuerhalten.

7. Verfahren nach Anspruch 5 oder 6 unter Verwendung einer Vorrichtung (1) gemäß Anspruch 3, wobei während des Schritts des Bewegens der Bauoberfläche (7) in Abhängigkeit von der detektierten Bauoberfläche (7) der Bauplattform (9) und/oder in Abhängigkeit von der detektierten Oberfläche des Bades des pulverisierten Materials (11) auf der Bauoberfläche (7) die Bauoberfläche (7) in eine Position gekippt wird, in der die Bauoberfläche (7) im Wesentlichen parallel zu der im Wesentlichen flachen Referenzebene (H) ist.

## Revendications

1. Appareil (1) de production d'un objet par fabrication additive, comprenant :
- une chambre de traitement (5) pour recevoir sur une surface de construction (7) d'une plaque de construction (9) un bain de matériau en poudre (11) qui peut être solidifié ;
- un support (13) pour positionner ladite plaque de construction (9) par rapport à un niveau de surface (L) dudit bain de matériau en poudre (11) dans ladite chambre de traitement (5) ;
- un dispositif de solidification (15) pour solidifier une partie sélective dudit matériau (11) ; et
- un dispositif de retour au repos (17) pour déplacer ladite surface de construction (7), par ledit support (13), vers une position de repos de sorte que ledit objet puisse être construit sur ladite surface de construction (7) de ladite plaque de construction (9), où ledit dispositif de retour au repos (17) comprend un dispositif de détection (21) comprenant une caméra configurée pour détecter ladite surface de construction (7) de ladite plaque de construction (9) et pour détecter ledit niveau de surface (L) dudit bain de matériau en poudre (11) sur ladite surface de construction (7), où ledit dispositif de retour au repos (17) est configuré pour déplacer ladite surface de construction (7) vers ladite position de repos tout en changeant une hauteur (h) dudit bain de matériau en poudre (11) au-dessus de ladite surface de construction (7) jusqu'à ce que ladite surface de ladite surface de construction (7) et/ou une image prédéterminée dudit niveau de surface (L) dudit bain de matériau en poudre (11) sur ladite surface de construction (7) soit/soient détectée(s) par ledit dispositif de détection (21), où ledit changement de ladite hauteur (h) dudit bain est tel que ledit niveau de surface (L) dudit bain de matériau en poudre (11) dans ladite chambre de traitement (5) est sensiblement maintenue jusqu'à ce que ladite surface de ladite surface de construction (7) et/ou une image prédéterminée dudit niveau de surface (L) dudit bain de matériau en poudre (11) sur ladite surface de construction (7) soit/soient détectée(s) par ledit dispositif de détection (21), où ledit dispositif de retour au repos (17) comprend un dispositif d'élimination de poudre (23) configuré pour éliminer au moins une couche de matériau en poudre (11) dudit bain de matériau en poudre (11) sur ladite surface de construction (7) de ladite plaque de construction (9) pour maintenir sensiblement ledit niveau de surface (L).

2. Appareil (1) selon la revendication 1, dans lequel ledit dispositif de retour au repos (17) comprend un dispositif de stratification (19) pour fournir une couche de matériau en poudre (11) sur ledit bain de matériau en poudre (11) sur ladite surface de construction (7) de ladite plaque de construction (9) pour maintenir sensiblement ledit niveau de surface (L).

3. Appareil (1) selon l'une quelconque des revendications précédentes, dans lequel ladite position de repos comprend un plan de référence sensiblement plat (H), où ledit dispositif de retour au repos (17) comprend un dispositif d'inclinaison (25) pour incliner ladite surface de construction (7) vers une position dans laquelle ladite surface de construction (7) est sensiblement parallèle audit plan de référence sensiblement plat (H) en fonction de ladite surface de construction détectée (7) de ladite plaque de construction (9) et/ou en fonction de ladite surface détectée dudit bain de matériau en poudre (11) sur ladite surface de construction (7).

4. Appareil (1) selon l'une quelconque des revendications précédentes, dans lequel ledit dispositif d'élimination de poudre (23) comprend un racleur qui est agencé pour se déplacer le long du niveau de surface (L) et éliminer ainsi une couche de matériau du bain de matériau (11).

5. Procédé de fabrication d'un objet par fabrication additive sur une surface de construction (7) d'une plaque de construction (9), en utilisant un appareil (1) selon l'une des revendications précédentes, le procédé comprend les étapes consistant à :
- recevoir ladite surface de construction (7) de ladite plaque de construction (9) dans ladite chambre de traitement (5) ;
- recevoir dans ladite chambre de traitement (5) ledit bain de matériau en poudre (11) qui peut être solidifié sur ladite surface de construction (7) audit niveau de surface (L) ;
- déplacer ladite surface de construction (7) vers ladite position de repos tout en changeant une hauteur (h) dudit bain de matériau en poudre (11) au-dessus de ladite surface de construction (7) dans ladite chambre de traitement (5) jusqu'à ce que ladite surface de ladite surface de construction (7) et/ou ladite image prédéterminée de ladite surface dudit bain de matériau en poudre (11) sur ladite surface de construction (7) soit/soient détectée(s) par ledit dispositif de détection (21), où pendant ladite étape de déplacement de ladite surface de construction (7) vers ladite position de repos, ledit changement de ladite hauteur (h) dudit bain est tel que ledit niveau de surface (L) dudit bain de matériau en poudre (11) dans ladite chambre de traitement (5) est sensiblement maintenu jusqu'à ce que ladite surface de ladite surface de construction (7) et/ou une image prédéterminée dudit niveau de surface (L) dudit bain de matériau en poudre (11) sur ladite surface de construction (7) soit/soient détectée(s) par ledit dispositif de détection (21), où pendant ladite étape de déplacement de ladite surface de construction (7), ledit dispositif d'élimination de poudre (23) élimine une couche de matériau en poudre (11) dudit bain de matériau en poudre (11) sur ladite surface de construction (7) de ladite plaque de construction (9) pour maintenir sensiblement ledit niveau de surface (L) dudit bain de matériau en poudre (11) dans ladite chambre de traitement (5).

6. Procédé selon la revendication 5 utilisant un appareil (1) selon la revendication 3, dans lequel pendant ladite étape de déplacement de ladite surface de construction (7), ledit dispositif de stratification (19) fournit une couche de matériau en poudre (11) audit bain de matériau en poudre (11) sur ladite surface de construction (7) de ladite plaque de construction (9) pour maintenir sensiblement ledit niveau de surface (L) dudit bain de matériau en poudre (11) dans ladite chambre de traitement (5).

7. Procédé selon la revendication 5 ou 6 utilisant un appareil (1) selon la revendication 3, dans lequel pendant ladite étape de déplacement de ladite surface de construction (7), ladite surface de construction (7) est inclinée vers une position dans laquelle ladite surface de construction (7) est sensiblement parallèle audit plan de référence sensiblement plat (H) en fonction de ladite surface de construction détectée (7) de ladite plaque de construction (9) et/ou en fonction de ladite surface détectée dudit bain de matériau en poudre (11) sur ladite surface de construction (7).
